Europäisches Patentamt

European Patent Office

Office européen des brevets

(19)

(11) Veröffentlichungsnummer: **0 008 695**
**B1**

(12) **EUROPÄISCHE PATENTSCHRIFT**

(45) Veröffentlichungstag der Patentschrift: **15.12.82**

(51) Int. Cl.³: **H 04 M 11/06**

(21) Anmeldenummer: **79102865.7**

(22) Anmeldetag: **08.08.79**

(54) Schaltungsanordnung für Fernsprechvermittlungssysteme, insbesondere Fernsprechnebenstellenanlagen, mit zusätzlichem Datenverkehr, z.B. mit Fernschreibern.

(30) Priorität: **29.08.78 DE 2837654**

(43) Veröffentlichungstag der Anmeldung:
**19.03.80 Patentblatt 80/6**

(45) Bekanntmachung des Hinweises auf die Patenterteilung:
**15.12.82 Patentblatt 82/50**

(84) Benannte Vertragsstaaten:
**DE FR GB NL SE**

(56) Entgegenhaltungen:
DE - A - 2 055 698
DE - B - 1 283 296
DE - B - 2 320 092
FR - A - 2 145 947
US - A - 3 934 088

ELECTRICAL COMMUNICATION, Vol. 45, Nr. 2, 1970, Seiten 116—122 London, G.B. U. PISKE et al.: "Integrated Comunication System for Speech and Data"
BULLETIN DES SCHWEIZERISCHEN ELEKTRO-TECHNISCHEN VEREINS, Vol. 67, Nr. 10, 15, Mai 1976 Zürich, CH. E. RIPPSTEIN: "Modulares Kommunikationssystem für Sprache und Daten"

(73) Patentinhaber: **SIEMENS AKTIENGESELLSCHAFT**
**Berlin und München**
**Postfach 22 02 61**
**D-8000 München 22 (DE)**

(72) Erfinder: **Fahrenschon, Franz, Dipl.-Ing.**
**Grundstrasse 11**
**D-8021 Neuried (DE)**
Erfinder: **Meier, Alfred**
**Lochhamer Strasse 113**
**D-8000 München 71 (DE)**
Erfinder: **Thinschmidt, Hans**
**Kreuzlinger Strasse 52 c**
**D-8034 Germering (DE)**

# Schaltungsanordnung für Fernsprechvermittlungssysteme, insbesondere Fernsprechnebenstellenanlagen, mit zusätzlichem Datenverkehr, z.B. mit Fernschreibern

Die Erfindung betrifft eine Schaltungsanordnung für Fernsprechvermittlungssysteme, insbesondere Fernsprechnebenstellenanlagen, mit zusätzlichem Datenverkehr, z.B. mit Fernschreibern, wobei die Fernschreiber als Datenendeinrichtung über eine Datenübertragungseinrichtung und eine Umschalteeinrichtung an die Fernsprechanschlußleitung einer Teilnehmerstation anschaltbar sind und wobei zur Herstellung von Fernschreibverbindungen neben den üblichen Verbindungssätzen für den Fernsprechverkehr durch Wahl einer vorgegebenen Kennziffer vor Wahl einer die gewünschte Verbindung kennzeichnenden Rufnummer ansteuerbare Sonderverbindungssätze für den Fernschreibverkehr vorgesehen sind, die die Umschaltung vom Fernsprechverkehr auf Fernschreibverkehr an den einzelnen Teilnehmerstationen bewirken und eine Anschaltung auf eine gesondertes Datenvermittlungssystem, z.B. Fernschreibvermittlungssystem, vorgesehen ist.

Fernsprechanlagen mit Datenverkehr sind für sich bereits bekannt, z.B. durch die DE—AS 18 06 442 bzw. durch DE—OS 21 34 350. Diese Einrichtungen arbeiten in der Weise, daß zunächst eine Fersprechverbindung zu einem gewünschten Teilnehmer innerhalb derselben Vermittlungsanlage oder über eine Verbindungleitung zu einem Teilnehmer einer anderen Vermittlungsanlage aufgebaut und nach Herstellung der gewünschten Verbindung auf Datenverkehr umgeschaltet wird.

Durch die DE—AS 12 83 296 ist eine Schaltungsanordnung für eine einem Fernsprechnetz und einem Fernschreibnetz gemeinsam dienende Vermittlungsstelle bekannt. Unter der Voraussetzung, daß bei den Teilnehmerstellen beider Netze Daten-Endgeräte Verwendung finden, soll eine Datenübertragung zwischen einem an das Fernsprechnetz und einem an das Fernschreibnetz angeschlossenen Datengerät möglich sein. Zu diesem Zweck wird eine besondere Koppelanordnung vorgesehen, die die Rolle einer Mischstufe erfüllt, indem sie einen Zugang von einem Netz zu dem anderen Netz erlaubt.

Es ist die Aufgabe der Erfindung unter Anwendung von Sonderverbindungssätzen in einfacher Weise den Übergang im Datenverkehr eines Fernsprechvermittlungssystems auf eine andere Art von Vermittlungssystem, z.B. Fernschreibvermittlungssysteme, zu ermöglichen.

Dies wird bei einer Anordnung der eingangs genannten Art dadurch erreicht, daß diese Anschaltung durch eine jeweils mit den Sonderverbindungssätzen gekoppelte und unmittelbar mit einer Anschlußleitung des gesonderten Datenvermittlungssystems verbundene Zusatzeinrichtung erfolgt, daß diese Zutazeinrichtung Schalteinrichtungen zum Empfang, zur Umsetzung und zur Weiterleitung von Leitungzeichen und Dateninformationen des einen Vermittlungssystems in die des anderen Vermittlungssystems und umgekehrt aufweist, daß die Umschaltung vom Fernsprechverkehr auf Datenverkehr im Fernsprechvermittlungssystem abhängig von den empfangenen Leitungskriterien gesteuert wird, daß nach der Umschaltung auf Datenverkehr der Datenaustausch allein durch geeignete Leitungzeichen gesteuert wird und daß über die Anschlußleitungen des gesonderten Datenvermittlungssystems eintreffende und von der Zusatzeinrichtung ausgewertete Verbindungswünsche erst nach Aufnahme und ausreichender Verarbeitung der für die Herstellung der Verbindung zur gewünschten Teilnehmerstation des Fernsprechvermittlungssystems, erforderlichen Wählziffern beantwortet werden.

Die Anordnung gemäß der Erfindung ermöglicht demnach den Übergang von einem Vermittlungssystem zu einem anderes gearteten Vermittlungssystem, so daß durch Ausnutzung der in den beiden Systemen gegebenen Wählmöglichkeiten die Zahl der Verbindungsmöglichkeiten wesentlich erhöht wird, ohne daß beide an einer möglichen Verbindung beteiligter Teilnehmer geeichzeitig Teilnehmer desselben Vermittlungssystems sind. Die erfindungsgemäß vorgesehene Zusatzeinrichtung sichert dabei ohne Zeitverzug die Umsetzung der Zeichen des einen Vermittlungssystems in solche des anderen und umgekehrt, gleichgültig, in welcher Richtung der Verbindungsaufbau erfolgt.

Die Umschaltung im Fernsprechvermittlungssystem auf Datenverkehr, abhängig von dem von der Zusatzeinrichtung aufgenommenen Leitungszeichen ermöglicht einen zeitgerechten Übergang auf den Datenverkehr mit direkter Übertragung der für den Datenaustausch zwischen den Teilnehmerstationen notwendigen Steuerzeichen.

Da die an die Zusatzeinrichtung angeschaltete Teilnehmeranschlußleitung des gesonderten Datenvermittlungssystems gleichzeitig die Funktion einer Leitungsabschlusschaltung an einer Teilnehmerstation des Datenvermittlungssystems wahrnimmt, muß verhindert werden, daß bereits bei Erreichen der Zusatzeinrichtung bei kommenden Verkehr ein Meldezeichen abgegeben wird, da dann keine Nachwahl und damit kein Verbindungsaufbau innerhalb der erreichten Fernsprechanlage mehr möglich wäre. Akkommende Verbindungswünsche werden daher frühestens nach Überprüfung der angewählten Teilnehmerstation auf ihren Belegungszustand und damit nach Aufnahme der notwendigen Ziffern für die Kennzeichnung der gewünschten Teilnehmerstation beantwortet. Auch wird in diesem Falle kein Fernsprechrufzeichen zur Station der Fernsprechanlage ausgelöst und die gewünschte Station als Fernsprecher in herkömmlicher Weise gerufen, sondern es wird direkt das zugehörige Datenendgerät angesteuert, da aus der Datenvermittlungsanlage nur ein Wunsch zur Datenübertragung kommen kann.

Die Lösung gemäss der Erfindung ermöglicht also in sehr einfacher Weise die Kopplung von Vermittlungssystemen für unterschiedliche Arten von zu vermittelnden Nachrichten, z.B. die Kopplung eines Fernsprechsystems mit einem Fernschreib- oder Telexsystem.

Gemäss einer Weiterbildung der Erfindung kann die Übertragung der Daten innerhalb des Fernsprechvermittlungssystems unter Zwischenschaltung von Modem mit einem abweichenden Übertragungsverfahren erfolgen, wobei der Modem an einem Ende der Übertragungsstrecke innerhalb der Zusatzeinrichtung vorgesehen ist, während der am anderen Ende der Übertragungsstrecke angeordnete Modem durch die Datenübertragungseinrichtung der für Datenverkehr ausgerüsteten Teilnehmerstation gebildet wird. Die Übertragung der Daten ist damit unabhängig von den Eigenschaften der Verbindungswege innerhalb des Fernsprechvermittlungssystems und deren Eignungsgrad für das im angeschlossenen Datenvermittlungssystem verwendete Übertragungsverfahren. Dabei werden durch die Einbeziehung des Modem an einem Ende des Verbindungsweges in die Zusatzeinrichtung gesonderte Anschaltevorrichtungen umgangen.

Eine andere Weiterbildung der Erfindung sieht vor, dass nach Empfang eines Schlusszeichens beim Datenverkehr durch die Zusatzeinrichtung im Fernsprechvermittlungssystem wieder auf Fernsprechbetrieb umgeschaltet und die Verbindung abhängig von den hierfür geltenden Kriterien, z.B. Auflegen des Handapparates bei abgehendem Verkehr, ausgelöst wird. Dadurch wird unabhängig davon, welche Seite den Datenverkehr abschliesst, die Rückschaltung auf den Fernsprechbetrieb in einheitlicher Weise geregelt, gleichgültig, ob zur Auslösung der im Fernsprechvermittlungssystem aufgebauten Verbindung noch weitere Bedingungen, z.B. Auflegen des Handapparates bei abgehendem Verkehr, zu erfüllen sind.

Bei einem das Fernsprechvermittlungssystem angeschlossenen Fernschreibvermittlungssystem ist eine Sicherung der Nachwahl dadurch in einfacher Weise möglich, dass nach Erkennen eines über eine Anschlussleitung des Fernschreibvermittlungssystems eintreffenden Verbindungswunsches—Umpolen des Schleifenruhestromes als Anrufzeichen—die Ruhestromschleife zunächst hochohmig bleibt, dass nachfolgende Schleifenunterbrechungen zur Übermittlung weiterer Wählziffern für die Kennzeichnung der gewünschten Teilnehmerstation im Fernsprechvermittlungs system in diesem Zustand übertragen und ausgewertet werden und dass erst nach Aufbau der gewünschten Verbindung und/oder Überprüfung der gewünschten Teilnehmerstation auf ihren Belegungszustand die Ruhestromschleife der Fernschreibanschlussleitung des gesonderten Fernschreibvermittlungssystems niederohmig geschaltet wird, was im Fernschreibvermittlungssystem als Freizeichen gewertet wird, wenn nicht nach Ablauf einer vorgegebenen Zeitdauer die Ruhestromschleife wieder hochohmig geschaltet wird.

Bei ankommender Belegung aus dem Fernschreibvermittlungssystem können die Steuerzeichen für die Zusatzeinrichtung über den Belegungszustand der gewünschten Teilnehmerstation des Fernsprechvermittlungssystems in an sich bekannter Weise von über die Fernsprechverbindung rückwärts gesendeten Hörtönen abgeleitet werden, oder aber die Steuerzeichen werden in zentral gesteuerten Systemen unmittelbar von den die Belegungskontrolle durchführenden zentralen Steuereinrichtungen geliefert.

Weitere Einzelheiten der Erfindung seien nachfolgend anhand eines in der Zeichnung dargestellten Ausführungsbeispiels näher erläutert. Im einzelnen zeigen

Fig. 1 ein Übersichtsschaltbild und

Fig. 2 ein Prinzipschaltbild eines Sonderverbindungssatzes mit Zusatzeinrichtung gemäss der Erfindung.

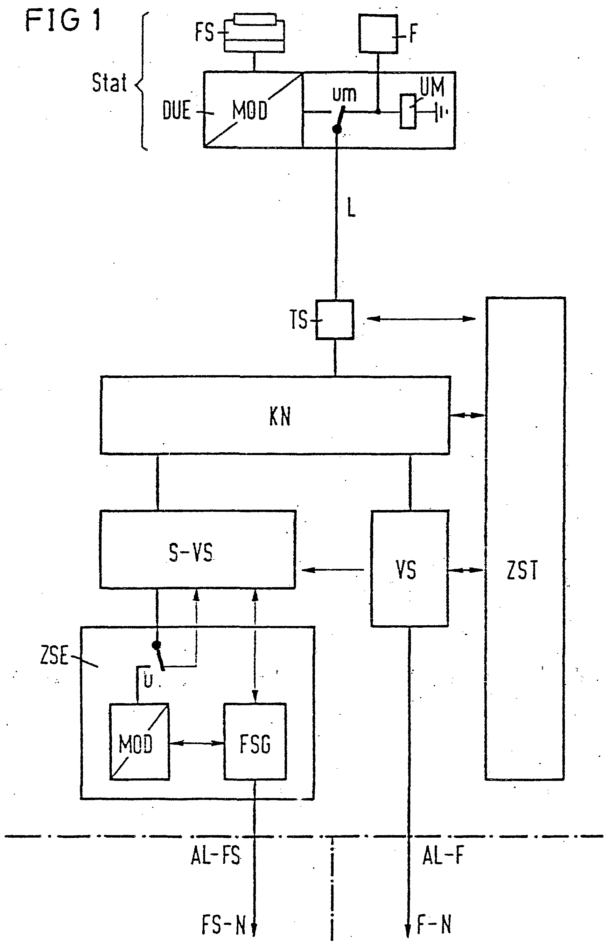

Das Übersichtsschaltbild nach Fig. 1 zeigt im oberen Teil eine Fernsprechvermittlungsanlage, die über Anschlussleitungen AL-F in an sich bekannter Weise mit dem allgemeinen Fernsprechnetz FN und zusätzlich gemäss der Erfindung über Anschlussleitungen AL-FS mit dem daneben bestehenden Fernschreib- oder Telexnetz FS-N verbunden ist, so dass in beide Netze hinein Verbindungen aufgebaut oder aus beiden Netzen kommende Verbindungen weitergeführt werden könne.

Die gezeigte Fernsprechvermittlungsanlage ist Ausgangs- oder Endpunkt von Fernschreibverbindungen. Sie könnte aber auch als Durchgangsvermittlungsanlage ausgebildet sein.

Ausgangs- oder Endpunkt solcher Fernschreibverbindungen des allgemeinen Fernschreibnetzes sind in an sich bekannter Weise ausgerüstete Teilnehmerstationen Stat, bei denen der Fernsprecher F über eine Umschalteeinrichtung UM einer Datenübertragungseinrichtung DUE mit der Teilnehmeranschlussleitung L verbunden ist. Diese Datenüber-tragungseinrichtung DUE weist neben der Umschalteeinrichtung UM ein Modem MOD auf, an das über eine genormte Schnittstelle ein Fernschreiber FS als Datenendgerät angeschlossen ist.

Die Teilnehmeranschlussleitung L ist in an sich bekannter Weise über eine Teilnehmerschaltung TS an das Vermittlungsnetzwerk KN der Fernsprechanlage angeschlossen, über das in an sich bekannter Weise Internverbindungen mit anderen Teilnehmerstationen der Anlage oder aber abgehende bzw. ankommende Verbindungen zu anderen bzw. von anderen Fernsprechanlagen über die Verbindungssätze VS und die Anschlussleitung AL-F unter Kontrolle einer Zentralsteuerung ZST hergestellt werden können.

Für den Fernschreibverkehr sind neben den dem reinen Fernsprechverkehr dienenden Verbindungssätzen VS weitere Sonderverbindungssätze S-VS vorgesehen, die über eine gesonderte Kennzahl vor Wahl der Rufnummer der gewünschten Teilnehmerstation gezielt ansteuerbar sind. Der gezeigte Sonderverbindungssatz S-VS dient nun nicht wie bisher der Steuerung des Datenverkehrs über die vorhandenen Fernsprechverbindungswege, sondern der gezeigte Sonderverbindungssatz S-VS ist in Auswirkung der Erfindung mit einer Zusatzeinrichtung ZSE fest gekoppelt, an die die Teilnehmeranschlussleitung AL-FS einer gesonderten Fernschreibvermittlungsanlage fest angeschlossen ist, so dass Fernsprech- und Fernschreibverbindungswege in Reihe geschaltet werden können.

Die Zusatzeinrichtung ZSE ist in Anlehnung an die Datenübertragungseinrichtung DUE der für den Fernschreibverkehr ausgerüsteten Teilnehmerstation einer Fernsprechanlage ebenfalls mit einer Umschalteeinrichtung U und einem Modem MOD ausgerüstet. Des weiteren weist die Zusatzeinrichtung ZSE eine den Abschluss der Teilnehmeranschlussleitung FS-AL der gesonderten Fernschreibvermittlungsanlage bildende Steuereinrichtung FSG auf, die unter anderem die Funktionen des üblichen Fernschreibgerätes wahrnimmt, nämlich Empfang und Senden von Leitungszeichen sowie von Informationen über die Anschlussleitung AL-FS. Zusätzlich dient diese Steuereinrichtung im vorliegenden Falle dazu, einen Teil der Leitungzeichen des einen Vermittlungssystems in solche des anderen und umgekehrt umzusetzen. Die nach Herstellung einer Verbindung zu übertragende Informationen oder Daten werden dagegen durch den Modem MOD umgesetzt. Die Übertragung innerhalb der Fernsprechvermittlungsanlage ist damit unabhängig von der Übertragungsart der angeschlossenen gesonderten Daten- oder Fernschreibvermittlungsanlage.

Bei Verwendung der gezeigten Fernsprechvermittlungsanlage als Durchgangsanlage zu einer anderen Vermittlungsanlage ändert sich hieran im Prinzip nichts. Die gezeigte Teilnehmerstation Stat befindet sich dann eben in einer anderen, nachgeschalteten Fernsprechvermittlungsanlage, die in an sich bekannter Weise über Fernsprechverbindungsleitungen erreichbar ist.

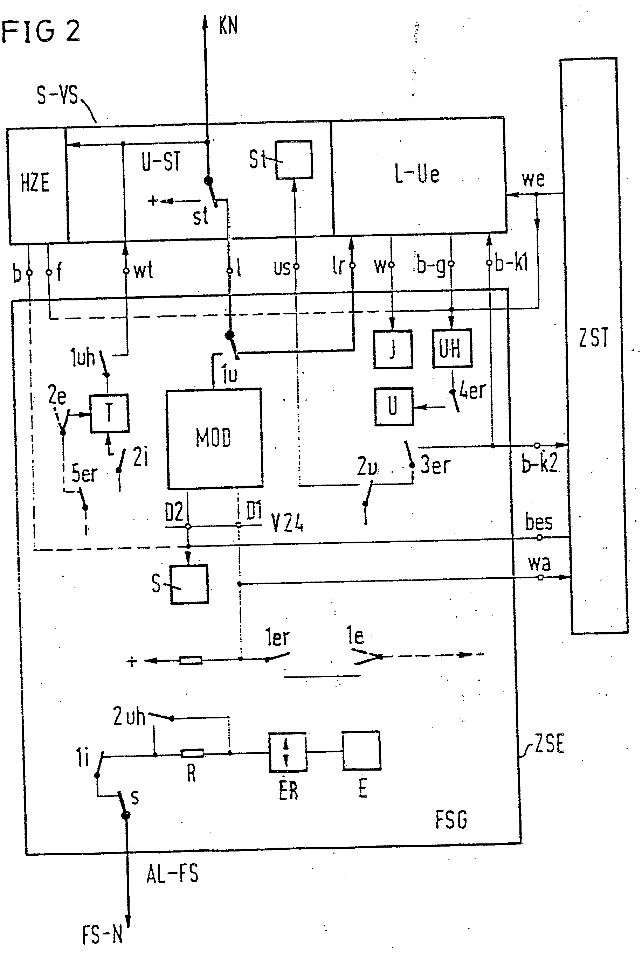

Fig. 2 zeigt Einzelheiten des Sonderverbindungssatzes S-VS und der diesem zugeordneten Zusatzeinrichtung ZSE in prinzipieller Darstellung. Der Sonderverbindungssatz S-VS gliedert sich in einen Leitungsüberwachungsteil L-Ue, der im wesentlichen die Funktionen eines üblichen Verbindungssatzes erfüllt, einen Umsteuerteil U-ST für die Umschaltung vom Fernsprech- auf den Fernschreibverkehr an der angeschlossenen Teilnehmerstation und ggf. einen Hörzeichenempfänger HZE, wenn die Steuerzeichen über den Belegungszustand der angerufenen Fernsprechstation bei ankommenden Fernschreibverkehr als Hörzeichen gesendet werden.

Die Zusatzeinrichtung ZSE ist unterteilt in das Modem MOD für die Umsetzung der in beiden Richtungen zu sendenden Dateninformationen einschliesslich der zugehörigen Steuerzeichen und die Steuereinrichtung FSG für die Umsetzung der Leitungszeichen. Beide Einrichtungen sind über eine Schnittstelle V24 gemäss den CCITT-Empfehlungen miteinander gekoppelt.

Der untere Teil der Steuereinrichtung FSG zeigt den Abschluss der angeschlossenen Teilnehmeranschlussleitung AL-FS des gesonderten Fernschreibnetzes FS-N mit den Leitungsüberwachungsschaltungen ER und E, sowie mit den Steuerschaltern s, i und 2uh der Schalteinrichtungen S, I und UH.

Diese Schalteinrichtungen können in an sich bekannter Weise ausgebildet sein, im einfachsten Falle als Relais oder dem heutigen Entwicklungsstand entsprechend als elektronische Schalteinrichtungen. Die Darstellung ist insoweit nur prinzipiell zu verstehen.

Die Schalteinrichtung ER ist bistabil und reagiert auf Umpolungen des Schleifenstromes im Schleifenstromkreis der Anschlussleitung AL-FS, die im Ruhezustand infolge des Widerstandes R hochohmig und mit einem Ruhestrom vorgegebener Richtung beaufschlagt ist, derzufolge die Schalter 1er bis 4er geöffnet sind, während Schalter 5er geschlossen ist.

Die Schalteinrichtung E überwacht den Schleifenstromkreis auf Stromunterbrechungen; sie ist infolge des im Ruhezustand der Leitungsschleife fliessenden Ruhestromes normalerweise angesprochen, und die Schalter 1e und 2e sind demzufolge geöffnet.

Die Schalteinrichtung I dient bei abgehendem Verkehr der Aufnahme der vom Leitungsteil L-Ue des Sonderverbindungssatzes S-VS gelieferten Wahlimpulse, die mit Schalter i als Stromunterbrechungen über die Anschlussleitung AL-FS weitergeleitet werden. Analoges gilt für die Schalteinrichtung S, die über die Schnittstellenleitung se vom Modem MOD angesteuert wird und mit Schalter s ebenfalls in Form von Stromunterbrechungen Impulse zur Darstellung der zu übertragenden Daten auf die Anschlussleitung AL-FS gibt.

Die Schalteinrichtungen UH und U steuern die Belegung der Zusatzeinrichtung ZSE und die Umschaltung von grundständigen Fernsprechverkehr auf den Fernschreibverkehr und damit die Anschaltung des Modem MOD in der Zusatzeinrichtung ZSE für den Informationsaustausch.

Die darüberhinaus vorgesehene Schalteinrichtung T steuert in an sich bekannter Weise die Aussendung eines Wähltones nach Belegung eines Sonderverbindungssatzes S-VS im abgehenden Verkehr, um dem rufenden Teilnehmer anzuzeigen, dass er weiterwählen kann. Diese Schalteinrichtung ist zweckmässig bistabil ausgebildet.

Die Arbeitsweise der gezeigten Anordnung ist nun folgende:

a) abgehender Verkehr:

Wünscht ein Teilnehmer der Fernsprechvermittlungsanlage eine abgehende Fernschreibverbindung, so baut er zunächst in herkömmlicher Weise eine Fernsprechverbindung auf: Abnehmen des Handapparates am Fernsprecher F (Fig. 1), Abwarten des Wählzeichens der Vermittlungsanlage und Wahl der für die Ansteuerung eines Sonderverbindungssatzes S-VS erforderlichen Kennzahl. Diese wird in an sich bekannter Weise von der Steuerung, z.B. durch die Zentralsteurung ZST, der Vermittlungsanlage ausgewertet. Falls ein Sonderverbindungssatz S-VS frei ist, wird die Teilnehmeranschlussleitung L des rufenden Teilnehmers über das Vermittlungsnetzwerk KN mit diesem Sonderverbindungssatz verbunden. Der Leitungsüberwachungsteil L-Ue des Sonderverbindungssatzes S-VS erkennt die abgehende Belegung und meldet dies über die Steuerleitung b-g durch Einschalten der Schalteinrichtung UH der Zusatzeinrichtung ZSE. Mit Schalter 2uh wird in der abgehenden Anschlussleitung AL-FS der Widerstand R kurzgeschlossen und die Schleife damit niederohmig geschaltet, was in der angeschlossenen Fernschreibvermittlungsanlage als Verbindungswunsch gewertet wird. Weiterhin wird vorbereitend mit Schalter 1uh die Steuerleitung wt zum Sonderverbindungssatz S-VS für die Abgabe des Wählaufforderungszeichens durchgeschaltet.

Nach Erkennen des Verbindungswunsches in der angeschlossenen Fernschreibvermittlungsanlage wird die Teilnehmerschleife kurzzeitig unterbrochen (Wählzeichen des Fernschreibsystems), was von der Schalteinrichtung E erkannt wird. Diese schliest die Schalter 1e und 2e, wobei mit Schalter 2e die Schalteinrichtung T eingeschaltet und ein Hörzeichen als Aufforderung für den rufenden Teilnehmer zur Weiterwahl ausgesendet wird.

Die nachfolgend vom rufenden Teilnehmer gewählten Wählziffern werden in herkömmlicher Weise von der Leitungsüberwachungseinrichtung L-Ue des Sonderverbindungssatzes S-VS aufgenommen und über die Steuerleitung w an die Schalteinrichtung I der Zusatzeinrichtung ZSE übergeben. Diese leitet mit Schalter 1i die Wahlimpulse als Schleifenstromunterbrechungen zur angeschlossenen Fernschreibvermittlungsanlage weiter. Weiterhin schaltet Schalter 2i beim erstmaligen Ansprechen der Schalteinrichtung I die Schalteinrichtung T wieder aus und damit Wahlaufforderungszeichen ab.

Ist der gerufene Fernschreibteilnehmer frei, so wird in der angeschlossenen Fernschreibvermittlungsanlage der Strom der Anschlussleitung AL-FS umgepolt (Freizeichen), was von der Schalteinrichtung ER ausgewertet wird. Durch Schliessen des Schalters 4er wird die Schalteinrichtung U in Reihe zur Schalteinrichtung UH eingeschaltet, die mit Schalter 1u die zum rufenden Teilnehmer führende Anschlussleitung auf das Modem MOD der Zusatzeinrichtung ZSE umschaltet.

Weiterhin wird über den Schalter 2u die monostabile Schalteinrichtung St im Sonderverbindungssatz S-VS kurzzeitig angeschaltet und damit positives Potential z.B. an eine der Adern der Anschlussleitung zum rufenden Teilnehmer gelegt, so dass in der Station Stat die Umschalteeinrichtung UM (Fig. 1) anspricht und bei gleichzeitigem Umschalten auf einen Selbsthaltestromkreis mit Schalter um den dortigen Fernschreiber FS über das Modem MOD der Datenübertragungseinrichtung DUE an die Teilnehmeranschlussleitung L schaltet und startet.

Nach Rückkehr der Schalteinrichtung St in die Ruhelage ist damit die Fernschreibübertragungsstrecke innerhalb der Fernsprechvermittlungsanlage betriebsbereit, so dass anschliessend der gewünschte Text übertragen werden kann.

Weiterhin wird durch Öffnen des Schalters 5er der Schalter 2e unwirksam geschaltet, und Schalter 1er schaltet den an die Schnittstellenleitung D1 des Modem MOD der Zusatzeinrichtung ZSE angeschlossenen Empfangsschaltkreis durch, so dass von der Schalteinrichtung E an der Fernschreibanschlussleitung AL-FS empfangene Zeichen über das Modem zum Fernschreiber FS an der rufenden Teilnehmerstation Stat weitergeleitet werden können. In umgekehrter Richtung werden vom Fernschreiber FS gelieferte Zeichen über die Schnittstellenleitung D2 an die Schalteinrichtung S weitergeleitet und mit Schalter s auf die Fernschreibanschlussleitung AL-FS gegeben.

Nach Übertragung des gewünschten Textes und Drücken der Schlusstaste des Fernschreibers FS wird die Schalteinrichtung S entsprechend lange eingeschaltet und mit Schalter s das Ende der Übertragung (Schlusszeichen) signalisiert. Dies führt nach Auswertung in der angeschlossenen Fernschreibvermittlungsanlage zur Umpolung des Schleifenstromes, so dass die Schalteinrichtung ER wieder in die Ruhelage zurückkehrt. Schalter 4er bewirkt durch Abschalten der Schalteinrichtung U die Rückschaltung auf den Fernsprechbetrieb, so dass die interne Fernsprechverbindung wieder von der Leitungsüberwachung L-Ue des Sonderverbindungssatzes S-VS überwacht wird und in an sich bekannter Weise die Auslösung dieser Fernsprechverbindung einleiten kann, wenn an der rufenden Teilnehmerstation Stat der Handapparat des Fernsprechers F wieder aufgelegt wird. Der Sonderverbindungssatz S-VS mit Zusatzeinrichtung ZSE wird dann endgültig freigeschaltet und steht für andere Verbindungen zur Verfügung.

Ergibt sich dagegen bei Herstellung einer gewünschten Fernschreibverbindung in die angeschlossene Fernschreibvermittlungsanlage, dass der gerufene Fernschreibteilnehmer besetzt ist, so liefert diese Anlage über die Anschlussleitung AL-FS das Besetztzeichen. In diesem Falle wird der Schleifenstrom ebenfalls wie beim Freizeichen umgepolt, aber nur kurzzeitig. Die Schalteinrichtung ER gelangt daher ebenfalls für kurze Zeit in die Arbeitslage und bewirkt wie bei einem freien gerufenen Fernschreibteilnehmer die Umschaltung auf den Fernschreibbetrieb. Anschliessend aber wird sofort wieder zurückgeschaltet, wenn die Schalteinrichtung ER wieder in die Ruhelage gelangt, was der Nachbildung des ankommenden Besetztzeichens im Tx-Netz entspricht.

b) ankommender Verkehr:

Ein über die Fernschreibanschlussleitung AL-FS ankommender Verbindungswunsch wird in bekannter Weise durch Umpolen der Ruhestromschleife signalisiert, was von der Schalteinrichtung. ER erkannt wird. Da die Schalteinrichtung U zu diesem Zeitpunkt ausgeschaltet ist, kann über die Reihenschaltung der Schalter 2u und 3er die ankommende Belegung über die Steuerleitung b-k1 dem Sonderverbindungssatz S-VS und über die Steuerleitung b-k2 der Zentralsteuerung ZST gemeldet werden.

Abweichend von der Arbeitsweise üblicher Fernschreibstationen unterbleibt jedoch das anschliessende Niederohmigschalten der Leitungsschleife als Rückmeldung, so dass weitere Wählziffern für den weiteren Aufbau der Verbindung im Bereich des Fernsprechvermittlungssystems übertragen werden können. Die daher nachfolgend über die Fernschreibanschlussleitung AL-FS eintreffenden Wählimpulse in Form von Schleifenunterbrechungen werden von der Schalteinrichtung E aufgenommen und mit Schalter 1e über die Steuerleitung wa zur Zentralsteuerung ZST weitergeleitet. Der Modem MOD kann auf diese Impulse nicht reagieren, da noch nicht auf den Fernschreibbetrieb umgeschaltet ist.

Sobald alle für die Ansteuerung einer gewünschten Teilnehmerstation Stat erforderlichen Wählziffern empfangen sind, wird in herkömmlicher Weise der entsprechende Verbindungsweg hergestellt und geprüft, ob der gerufene Teilnehmer frei oder belegt ist, was die Zentralsteuerung ZST überwacht. Über die Steuerleitung we wird dann die Schalteinrichtung UH eingeschaltet und damit über Schalter 4er auch die Schalteinrichtung U. Schalter 2uh schaltet die Fernschreibanschlussleitung AL-FS niederohmig und meldet so die erfolgte Belegung rückwärts. Schalter 1u schaltet vom Fernsprechbetrieb auf den Modem MOD in der Zusatzeinrichtung ZSE um, und über die Schalter 2u und 2er sowie die Steuerleitung us wird die Schalteinrichtung St eingeschaltet, die die Umschaltung an der gerufenen Teilnehmerstation Stat in der bereits erläuterten Weise bewirkt. Es besteht damit Schreibbereitschaft.

Ein an der gerufenen Teilnehmerstation hörbares Rufzeichen wird in diesem Falle nicht ausgesendet, da über die ankommende Fernschreibanschlussleitung AL-FS nur der Fernschreibverkehr möglich ist.

Ist die angewählte Teilnehmerstation Stat besetzt, so wird nach einer vorgegebenen Zeitdauer das Signal auf der Steuerleitung we wieder abgeschaltet und über die Steuerleitung bes die Schalteinrichtung S für eine vorgegebene Dauer eingeschaltet. Der Schleifenstromkreis der Fernschreibanschlussleitung AL-FS wird demzufolge für eine vorgegebene Zeitdauer unterbrochen, was in der angeschlossenen Vermittlungsanlage als Besetztzeichen gewertet wird, während in der Fernsprechvermittlungsanlage die bereits aufgebaute Verbindung wieder ausgelöst wird.

Alle übrigen Funktionen, wie die Übertragung der Fernschreibzeichen und Auslösen am Ende des Datenaustausches, entsprechen denen bei gehendem Verkehr.

Bei zentralgesteuerten Fernsprechvermittlungsanlagen mit Belegungskontrolle anhand gespeicherter Daten kann der Belegungszustand einer gewünschten Teilnehmerstation ohne vorherigen Aufbau einer entsprechenden Verbindung überprüft werden. Im Besetztfalle können daher die Signale an den Steuerleitungen we und bes sofort abgegeben werden.

Weiterhin kann in Fernsprechvermittlungsanlagen mit Frei- und Besetztrückmeldung durch ein Hörzeichen über den aufgebauten Fernsprechverbindungsweg eine Steuerung über die Steuerleitungen we und bes der Zentralsteuerung ZST entfallen. Statt dessen ist im Sonderverbindungssatz S-VS ein Hörzeichenempfänger HZE mit den Steueranschlüssen f und b vorzusehen, der die Zeichen auswertet und in Steuersignale für die Zusatzeinrichtung ZSE umsetzt, was gestrichelt angedeutet ist.

Auch können in Anlagen ohne Zentralsteuerung ZST die von der Schalteinrichtung E aufgenommenen Wählzeichen statt über die Steuerleitung wa zur Zentralsteuerung ZST an die Leitungsüberwachung L-Ue des Sonderverbindungssatzes S-VS übergeben werden, die dann in herkömmlicher Weise wie ein normaler Verbindungssatz die Weiterleitung und damit den Verbindungsaufbau steuert.

Im Prinzip kann also der gemäss der Erfindung vorgesehene Sonderverbindungssatz S-VS mit der Zusatzeinrichtung ZSE in jeder vorhandenen Fernsprechvermittlungsanlage eingesetzt werden.

**Patentansprüche**

1. Schaltungsanordnung für Fernsprechvermittlungssysteme, insbesondere Fernsprechnebenstellenanlagen, mit zusätzlichem Datenverkehr, z.B. mit Fernschreibern, wobei die Fernschreiber (FS) als Datenendeinrichtung über eine Datenübertragungseinrichtung (DUE) und eine Umschalteeinrichtung (um) an die Fernsprechanschlußleitung (L) einer Teilnehmerstation (stat) anschaltbar sind und wobei zur Herstellung von Fernschreibverbindungen neben den üblichen Verbindungssätzen (VS) für den Fernsprechverkehr durch Wahl einer vorgegebenen Kennziffer vor Wahl einer die gewünschte Verbindung kennzeichnenden Rufnummer ansteuerbare Sonderverbindungssätze (S-VS) für den Fernschreibverkehr vorgesehen sind, die die Umschaltung vom Fernsprechverkehr auf Fernschreibverkehr an den einzelnen Teilnehmerstationen bewirken und eine Anschaltung auf ein gesondertes Datenvermittlungssystem, z.B. Fernschreibvermittlungssystem, vorgesehen ist, dadurch gekennzeichnet, daß diese Anschaltung durch eine jeweils mit den Sonderverbindungssätzen (S-VS) gekoppelte und unmittelbar mit einer Anschlußleitung (AL-FS) des gesonderten Datenvermittlungssystems verbundene Zusatzeinrichtung (ZSE) erfolgt, daß diese Zusatzeinrichtung Schalteinrichtungen (FSG/MOD) zum Empfang, zur Umsetzung und der Weiterleitung von Leitungszeichen und Dateninformationen des einen Vermittlungssystems in die des anderen Vermittlungssystems und umgekehrt aufweist, daß die Umschaltung vom Fernsprechverkehr auf Datenverkehr im Fernsprechvermittlungssystem abhängig von den empfangenen Leitungskriterien gesteuert wird, daß nach der Umschaltung auf Datenverkehr der Datenaustausch allein durch geeignete Leitungszeichen gesteuert wird und daß über die Anschlußleitungen (AL-FS) des gesonderten Datenvermittlungssystems (FS-N) eintreffende und von der Zusatzeinrichtung (ZES) ausgewertete Verbindungswünsche erst nach Aufnahme und ausreichender Verarbeitung der für die Herstellung der Verbindung zur gewünschten Teilnehmerstation (Stat) des Fernsprechvermittlungssystems erforderlichen Wählziffern beantwortet werden.

2. Schaltungsanordnung nach Anspruch 1, dadurch gekennzeichnet, dass die Übertragung der Daten innerhalb des Fernsprechvermittlungssystems unter Zwischenschaltung von Modem (MOD) mit einem abweichenden Übertragungsverfahren erfolgt und dass der Modem am einen Ende der Übertragungsstrecke innerhalb der Zusatzeinrichtung (ZSE) vorgesehen ist, während der am anderen Ende der Übertragungsstrecke angeordnete Modem durch die Datenübertragungseinrichtung (DUE) der für Datenverkehr ausgerüsteten Teilnehmerstation (Stat) gebildet wird.

3. Schaltungsanordnung nach den Ansprüchen 1 oder 2, dadurch gekennzeichnet, dass nach Empfang eines Schlusszeichens beim Datenverkehr durch die Zusatzeinrichtung (ZSE) im Fernsprechvermittlungssystem wieder auf Fernsprechbetrieb umgeschaltet und die aufgebaute Fernsprechverbindung abhängig von den hierfür geltenden Kriterien (z.B. Auflegen des Handapparates) ausgelöst wird.

4. Schaltungsanordnung nach einem der Ansprüche 1 bis 3, dadurch gekennzeichnet, dass nach Erkenen eines über eine Anschlussleitung (AL-FS) des Fernschreibvermittlungssystems eintreffenden Verbindungswunsches (Umpolen des Schleifenruhestromes als Anrufzeichen) die Ruhestromschleife zunächst hochohmig bleibt, dass nachfolgende Schleifenunterbrechungen zur Übermittlung weiterer Wählziffern für die Kennzeichnung der gewünschten Teilnehmerstation (Stat) im Fernsprechvermittlungssystem in diesem Zustand übertragen und ausgewertet werden und dass erst nach Aufbau der gewünschten Verbindung und/oder Überprüfung der gewünschten Teilnehmerstation (Stat) auf ihren Belegungszustand die Ruhestromschleife der Fernschreibanschlussleitung (AL-FS) des gesonderten Fernschreibvermittlungssystems niederohmig geschaltet wird, was im Fernschreibvermittlungssystem als Freizeichen gewertet wird, wenn nicht nach Ablauf einer vorgegebenen Zeitdauer die Ruhestromschleife wieder hochohmig geschaltet wird (Besetztzeichen).

5. Schaltungsanordnung nach Anspruch 4, dadurch gekennzeichnet, dass das Niederohmigschalten der Ruhestromschleife der ins Fernschreibvermittlungssystem führenden Anschlussleitung (AL-FS) zusammen mit der Umschaltung auf Datenverkehr in der Zusatzeinrichtung (ZSE) erfolgt, so dass bei freiem gerufenen Teilnehmer unmittelbar danach Schreibbereitschaft gegeben ist und die Steuerung des Datenaustausches allein durch Leitungszeichen möglich ist.

6. Schaltungsanordnung nach einem der Ansprüche 1 bis 5 für Fernsprechanlagen mit Aufbau der Verbindung bis zum gewünschten Teilnehmer und anschliessender Belegungskontrolle, dadurch gekennzeichnet, dass bei freiem Teilnehmeranschluss durch ein zusätzliches Steuerzeichen das Fernsprechrufzeichen zum gerufenen Teilnehmer unterdrückt und die rückwärts gesendeten Hörzeichen (frei oder besetzt) durch einen Hörzeichenempfänger (HZE) im Sonderverbindungssatz (S-VS) ausgewertet werden, der diese Hörzeichen in Steuerzeichen für die Zusatzeinrichtung (ZSE) umsetzt.

7. Schaltungsanordnung nach einem der Ansprüche 1 bis 5 für Fernsprechanlagen mit Belegungskontrolle durch eine zentrale Einrichtung, dadurch gekennzeichnet, dass die Steuerzeichen für die Zusatzeinrichtung (ZSE) zur Kennzeichnung des Belegungszustandes des gewünschten Teilnehmers unmittelbar von der zentralen Einrichtung (ZST) geliefert werden.

**Revendications**

1. Montage pour des systèmes de commutation téléphonique, en particulier pour des autocommutateurs, avec trafic additionnel de données, par exemple avec des télescripteurs, du type dans lequel les télescripteurs (FS) sont susceptibles d'être branchés, en tant qu'équipement terminal de données, par l'intermédiaire d'un équipement de transmission de données (DUE) et d'un dispositif de commutation (um), sur la ligne téléphonique (L) d'un poste téléphonique (Stat), et dans lequel, pour l'établissement de liaisons télex, on prévoit, en plus des dispositifs de liaison (VS) pour le trafic téléphonique, par la sélection d'un chiffre caractéristique prédéterminé, avant le numéro d'appel caractérisant la communication souhaitée, des dispositifs de liaison particuliers (S-VS) pour le trafic télex, qui provoquent, au niveau des différents postes téléphoniques, la commutation du trafic téléphonique sur le trafic télex, un branchement sur un système de commutation données particulier, par exemple un système de commutation données particulier, par exemple un système de commutation télex, étant prévu, caractérisé par le fait que ce branchement a lieu à l'aide d'une installation supplémentaire (ZSE) couplée aux dispositifs de liaison particuliers (S-VS) et reliée directement avec une ligne d'accès (AL-FS) du système de commutation de données particulier, que cette installation supplémentaire comporte des installations de commutation (FSG-OMD) pour la réception, pour la conversion et pour la transmission de signaux de ligne et d'informations de données dans le système de commutation dans ceux de l'autre système de commutation, et inversement, que la commutation de trafic téléphonique sur trafic de données dans le système de commutation téléphonique est contrôlée en fonction des critères de ligne reçus, qu'après la commutation sur trafic de données, l'échange de données est contrôlé uniquement par des signes de ligne appropriés et que les souhaits exprimés pour une communication souhaitée arrivant par l'intermédiaire des lignes d'accès (AL-FS) du système de commutation de données particulier (FS-F) et évalués par l'installation supplémentaire (ZES) ne soient satisfaits qu' après prise en charge et traitement suffisant des chiffres sélectionnés qui sont nécessaires pour l'établissement de la communication avec le poste téléphonique souhaité (Stat) du système de commutation téléphonique.

2. Montage selon la revendication 1, caractérisé par le fait que la transmission des données à l'intérieur du système de commutation téléphonique a lieu avec intercalation de modems à procédé de transmission différencié, et que le modem est prévu à une extrémité de la voie de transmission, à l'intérieur de l'installation supplémentaire (ZSE), alors que le modem disposé à l'autre extrémité de la voie de transmission est formé par l'installation de transmission de données (DVE) du poste téléphonique (Stat) équipé pour le trafic de données.

3. Montage selon les revendications 1 ou 2, caractérisé par le fait qu'après réception d'un caractère de fin de message lors du trafic de données, on commute à nouveau sur le service en téléphonie, à l'aide de l'installation supplémentaire (ZSE) prévue dans le système de commutation téléphonique, et la communication téléphonique établie est déclenchée en fonction des critères qui sont valables à cet égard (par exemple le placement du combiné sur l'appareil téléphonique).

4. Montage selon l'une des revendications 1 à 3, caractérisé par le fait qu'après identification d'un souhait exprimé pour une communication arrivant par une ligne d'accès (AL-FS) du système de commutation télex (inversion de polarité du courant de repos de la boucle en tant que signal d'appel), la boucle de courant de repos reste d'abord fortement ohmique, que des interruptions de boucle suivantes sont, pour la transmission d'autres chiffres d'appel pour caractériser l'appareil téléphonique (Stat) souhaitée dans le système de commutation téléphonique, transmises dans cet état et sont évaluées, et ce n'est qu'après établissement de la communication souhaitée et/ou contrôle du poste téléphonique (Stat) quant à sont état d'occupation, que la boucle de courant de repos de la ligne d'accès (AL-FS) du système de commutation télex particulier est commutée dans son état faiblement ohmique, ce qui, dans le système de commutation télex, est évalué comme signe de non-occupation, à moins qu'après une durée prédéterminée la boucle de courant de repos soit à nouveau commutée à une valeur fortement ohmique (signal d'occupation).

5. Montage selon la revendication 4; caractérisé par le fait que la commutation à la valeur fortement ohmique de la boucle de courant de repos de la ligne (AL-FS) menant dans le système de commutation télex, a lieu en même temps que la commutation sur trafic de données, dans l'installation supplémentaire (ZSE), en sorte que, dans le cas d'un abonné appelé libre, la disponibilité d'écriture est donnée immédiatement après, et que la commande de l'échange de données n'est possible que par des signaux de ligne.

6. Montage selon l'une des revendication 1 à 5 pour des installations téléphoniques avec établissement de la communication jusqu'à l'abonné souhaité, suivi du contrôle de l'occupation, caractérisé par le fait que dans le cas où l'abonné est libre, et à l'aide d'un signal de commande supplémentaire, le signal téléphonique d'appel vers l'abonné appelé est supprimé et les signaux acoustiques émis en retour (libres ou occupés) sont évalués par un récepteur de signaux acoustiques (HZE) dans le dispositif de liaison particulier (S-VS), qui transforme les signaux acoustiques en signaux de commande pour l'installation supplémentaire (ZSE).

7. Montage selon l'une des revendications 1 à 5 pour des installations téléphoniques avec contrôle de l'occupation par une installation centrale, caractérisé par le fait que les signaux de commande pour l'installation supplémentaire (ZSE) sont fournis directement par l'installation centrale (ZST) pour caractériser l'état d'occupation de l'abonné souhaité.

## Claims

1. Circuit arrangement for telephone exchange systems, in particular PBX telephone systems with additional data traffic, for example employing teleprinters, where the teleprinters (FS) can be connected as a data terminal device via a data transmission device (DUE) and via a switching device (UM) to the telephone connection line (L) of a subscriber station (Stat), and where for the establishment of teleprinter connections, in addition to the usual connection sets (VS) for the telephone traffic, special connection sets (S-VS) which can be operated by the dialling of a pre-determined code digit prior to the dialling of a subscriber number which characterises the connection, are provided for the teleprinter traffic, which special connection sets serve to switch from telephone traffic to teleprinter traffic in the individual subscriber stations and where connection to a special data exchange system e.g. a teleprinter exchange system is provided, characterised in that this connection is effected by an additional device (ZSE) which is coupled to the special connection sets (S-VS) and is directly connected to a connection line (AL-FS) of the special data exchange system, that this additional device comprises switching devices (FSG/MOD) for the reception, conversion and forwarding of line signals and data information from the one exchange system into those of the other exchange system and vice versa, that the switch-over from telephone traffic to data traffic in the telephone exchange system is controlled in dependence upon the received line criteria, that following switch-over to data traffic the data exchange is controlled only by appropriate line signals, and that connection requests which arrive via the connection lines (AL-FS) of the special data exchange system (FS-N) and which are analysed by the additional device (ZES) are responded to only following the reception and adequate processing of the dialled digits required for the establishment of the connection to the desired subscriber station (Stat) within the telephone exchange system.

2. Circuit arrangement as claimed in claim 1, characterised in that the transmission of the data within the telephone exchange system is effected via an interposed modem (MOD) with a differing transmission method, and that the modem at one end of the transmission link is arranged within the additional device (ZSE) whereas the modem arranged at the other end of the transmission link is formed by the data transmission device (DUE) of the subscriber station (Stat) equipped for data traffic.

3. Circuit arrangement as claimed in claims 1 or 2, characterised in that following the reception of a closing signal during data traffic by the additional device (ZSE) in the telephone exchange system a switch-back is made to telephone operation and the established telephone connection is cleared in dependence upon the governing criteria (e.g. replacement of the handset).

4. Circuit arrangement as claimed in one of the claims 1 to 3, characterised in that following the recognition of a connection request which arrives via a connection line (AL-FS) within the telephone exchange system (reversal of polarity of the loop closed circuit as call signal) the closed circuit loop initially remains highly resistive, that subsequent loop interruptions for the transmission of further dialled digits in order to characterise the required subscriber station (Stat) in the telephone exchange system are transmitted and analysed in this state, and that only following the establishment of the desired connection and/or the checking of the desired subscriber station (Stat) in respect of its state of seizure is the closed circuit loop of the teleprinter connection line (AL-FS) of the special teleprinter exchange system switched low-resistive which in the teleprinter exchange system is evaluated as a ringing signal unless, following the expiry of a pre-determined length of time, the closed circuit loop is again switched highly resistive (engaged signal).

5. Circuit arrangement as claimed in claim 4, characterised in that the switching into a low-resistance state of the closed circuit loop of the connection line (AL-FS) which leads into the teleprinter exchange system takes place together with the switch-over to data traffic in the additional device (ZSE) so that when the called subscriber is free printing facilities are immediately provided and it is possible to control the data exchange operation solely by line signals.

6. Circuit arrangement as claimed in one of the claims 1 to 5, for telephone systems comprising connection establishment to the desired subscriber and subsequent seizure monitoring, characterised in that when the subscriber terminal is free, by means of an additional control signal the telephone ringing signal to the called subscriber is suppressed and the audio signal (free or engaged) which is transmitted in the reverse direction is evaluated by an audio signal receiver (HZE) which is arranged in the special connection set (S-VS) and which converts these audio signals into control signals for the additional device (ZSE).

7. Circuit arrangement as claimed in one of the claims 1 to 5 for telephone systems featuring seizure monitoring by a central device, characterised in that the control signals for the additional device (ZSE) serving to characterise the state of seizure of the desired subscriber are supplied directly by the central device (ZST).

FIG 1

FIG 2

0 008 695